# EUROPEAN PATENT SPECIFICATION

(11) **EP 4 235 627 B1**
(45) Date of publication and mention of the grant of the patent: **05.11.2025**
(21) Application number: 23158650.4
(22) Date of filing: 24.02.2023
(51) Int. Cl.: G08G 5/22

(54) **LEARNING BASED SYSTEM AND METHOD FOR VISUAL DOCKING GUIDANCE TO DETECT NEW APPROACHING AIRCRAFT TYPES**
LERNBASIERTES SYSTEM UND VERFAHREN ZUR VISUELLEN ANDOCKANLEITUNG ZUR ERKENNUNG NEUER SICH NÄHERNDER FLUGZEUGTYPEN
SYSTÈME ET PROCÉDÉ BASÉS SUR L'APPRENTISSAGE POUR GUIDAGE D'ACCUEIL VISUEL POUR DÉTECTER DE NOUVEAUX TYPES D'AÉRONEFS EN APPROCHE

(30) Priority: 24.02.2022 IN 202211009932
(43) Date of publication of application: 30.08.2023
(60) Divisional application: 25199120.4
(73) Proprietor: Honeywell International Inc., Charlotte, NC 28202 (US)
(72) Inventor: PAL, Debabrata, Charlotte, 28202 (US); ALLADI, Abhishek, Charlotte, 28202 (US); GADDE, Bhavya Sri, Charlotte, 28202 (US)
(74) Representative: Haseltine Lake Kempner LLP

(56) References cited:
- EP-A1- 3 196 853
- EP-A1- 3 951 421
- SYED ZAFAR ALI ET AL: "A generalized higher order neural network for aircraft recognition in a video docking system", NEURAL COMPUTING AND APPLICATIONS, SPRINGER-VERLAG, LO, vol. 19, no. 1, 8 January 2009 (2009-01-08), pages 21 - 32, XP019782458, ISSN: 1433-3058

## Description

### Technical Field

The present disclosure relates to detection, tracking, and docking aircraft in a taxiway, apron, or bridge area of an airport.

### Background

The airline industry is continuously evolving to ensure passenger safety and comfort with reduced operational cost. One such service includes safe docking of aircraft so that a covered bridge can be connected between the aircraft and airport terminal building. This helps passengers to walk through the bridge without getting exposed to adverse weather conditions and to avoid an intermediate travel hassle of having to use airport bus service from the aircraft to the terminal building.

These bridges are telescopically extendible with flexibility to adjust height based on target aircraft shape and size. Examples of different types of passenger boarding bridges include apron drive bridges, radial drive bridges, and over-the-wing (OTW) bridges.

Guiding an approaching aircraft to a specific stopping position adjacent to the bridge is a labor intensive and time-consuming activity. In this process, a pilot controlling the aircraft follows a lead-in line to taxi the aircraft to the stopping position through the assistance of ground marshallers. Typically, the lead-in line is a painted marker to guide the aircraft along a predetermined path to the stopping position.

Stop lines are other types of markings at the stopping position the locations of which vary based on the aircraft shape and size and are placed at the location where the nose gear of the aircraft is supposed to be positioned when correctly oriented with respect to the bridge. The pilot plays a crucial role to precisely stop the nose gear of the aircraft at its corresponding fixed stop line.

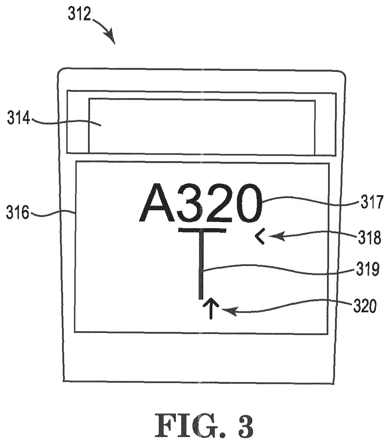

Typically, for larger aircraft (e.g., Boeing 747-X00) due to limited apron visibility by the pilot, a Visual Docking Guidance System (VDGS) is helpful wherein a camera is deployed in front of the stop lines. VDGS includes an electronic display dashboard (shown in Figure 3) which senses the aircraft and displays alphanumeric characters and symbols visible on a display in front of the aircraft that the pilot can see to guide aircraft to the correct stopping position.

To enable a VDGS, one or more sensors (e.g., RGB cameras, laser imaging devices, infrared sensors, etc.) are positioned in alignment with the lead in-line. The sensor continuously scans for an approaching aircraft. Based on sensor received data and known reference data (e.g., 3D models of the aircraft / images / derived statistics), VDGS identifies the aircraft's type and its relevant stopping position is then looked up in VDGS memory for further display in its dashboard. While the aircraft continues to approach, real-time alignment adjustment for any offset between the front landing gear and the stop line is displayed in VDGS so that pilot can take corrective action while approaching.

To avoid human error by ground marshallers and poor visibility of them by the pilot sitting at a higher height of large sized aircraft and generally in bad weather, VDGS directly guides the pilot with its dashboard to park precisely for a wide range of parking distances and curved approaches. A reliable VDGS system should be able to detect aircraft automatically in low illumination and bad weather conditions. It should also notify an approaching aircraft's pilot when it is not safe to approach further. The VDGS can also check for any obstacles, measure free parking area space, provide azimuth offset adjustment guidance, and provide accurate distance-to-go information to the pilot.

To test a VGDS (which is an image analysis based system), or any other system which supports visual guidance for aircraft parking at an airport, a video or series of images of the aircraft approaching a parking bay is required where the aircraft is in the field of view (FoV). This will allow the testing engine (software) to detect if the imager of the VGDS is efficiently able to provide docking guidance.

There is no sufficient data set to test the system for providing accurate guidance for every aircraft model in a real field of view. Capturing video of every aircraft is a time consuming process and is not a cost-effective approach. This leads to dependency on skilled ground marshallers and creates a barrier in making a smart and safe airport management system.

EP 3 951 421 A1 discloses tracking aircraft in and near a ramp area and one method includes receiving camera image data of an aircraft while the aircraft is approaching or in the ramp area, receiving LIDAR/Radar sensor data of an aircraft while the aircraft is approaching or in the ramp area, and merging the camera image data and the LIDAR/Radar sensor data into a merged data set.

SYED ZAFAR ALI ET AL: "A generalized higher order neural network for aircraft recognition in a video docking system", NEURAL COMPUTING AND APPLICATIONS, SPRINGER-VERLAG, LO, vol. 19, no. 1, 8 January 2009 (2009-01-08), pages 21-32 evaluates two neural networks architectures for recognition of civil airliners in a Video docking system.

EP 3 196 853 A1 discloses a machine vision-based method and system for aircraft docking guidance and aircraft type identification.

### Summary

The present invention is defined by the independent claims, to which reference should now be made. Advantageous embodiments are set out in the dependent claims.

### Brief Description of the Drawings

Figure 1 illustrates a number of aircraft bridge area arrangements that can be used in accordance with one or more embodiments of the present disclosure.
Figure 2 illustrates a gate area layout that can be used in accordance with one or more embodiments of the present disclosure.
Figure 3 illustrates a display providing aircraft and alignment details to the pilot in accordance with one or more embodiments of the present disclosure.
Figure 4 illustrates a method flow in accordance with one or more embodiments of the present disclosure.
Figure 5 illustrates a method flow for creating aircraft model data in accordance with one or more embodiments of the present disclosure.
Figure 6 illustrates a method flow for creating aircraft classification data in accordance with one or more embodiments of the present disclosure.
Figures 7A, 7B and 7C illustrate a visual depiction of a process for creating aircraft classification data in accordance with one or more embodiments of the present disclosure.
Figure 8 illustrates a visual depiction of another process for creating aircraft classification data in accordance with one or more embodiments of the present disclosure.
Figure 9 illustrates a flow diagram of a system showing some components of the system and some functions of the system in accordance with one or more embodiments of the present disclosure.
Figure 10 illustrates another method flow for creating aircraft classification data in accordance with one or more embodiments of the present disclosure.
Figure 11 illustrates a computing device for use in accomplishing bridge area aircraft movement functions in accordance with one or more embodiments of the present disclosure.

### Detailed Description

Based on the increased capacity over airspace and passenger throughput, most larger airports are seeing an increasing number of aircraft movements per day. With limited infrastructure, it can be difficult for the airports to manage the increased demand and capacity and with pressure to keep arrivals and departures on time. The embodiments of the present disclosure overcome the above challenges, by improving ground operations to reduce aircraft turnaround time.

This is accomplished by providing docking guidance systems and methods that utilize a new aircraft modeling functionality. The data generated for new aircraft model testing should satisfy existing requirements of visual guidance system or equivalent for effective detection, identification, and guidance as mentioned below. In order for accurate testing, it is preferable that the aircraft, at a search position, be in the FoV of the imaging device. At a stop position, it is desirable to have clear visibility of the aircraft having a view of one engine, a front pilot windshield or front portion of the fuselage, and the tail tip.

A smart learning-based guidance system of the present disclosure can automatically detect and classify approaching aircraft in real-time irrespective of weather, day-light condition and provide docking guidance. The approaching aircraft can be any known aircraft type or can be a completely new aircraft type.

To detect a new aircraft and generate requisite visual docking guidance three different types of solutions based on usage are provided herein. All of these solutions can use a low cost image sensor to capture image / video as input and process them using, for example, a neural network-based model (e.g., precisely, deep neural network, etc.). A brief summary of solution stages is provided below.

Initiate and complete synthetic docking video/image generation for a new aircraft model.

Initiate learning-based aircraft detection and type classification including the synthetic docking video/image generation for the new aircraft model.

Initiate real-time aircraft (new/existing) detection and docking guidance generation including the synthetic docking video generation for the new aircraft model.

In the following detailed description, reference is made to the accompanying drawings that form a part hereof. The drawings show, by way of illustration, how one or more embodiments of the disclosure may be practiced.

These embodiments are described in sufficient detail to enable those of ordinary skill in the art to practice one or more embodiments of this disclosure. It is to be understood that other embodiments may be utilized and that process, computerized, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

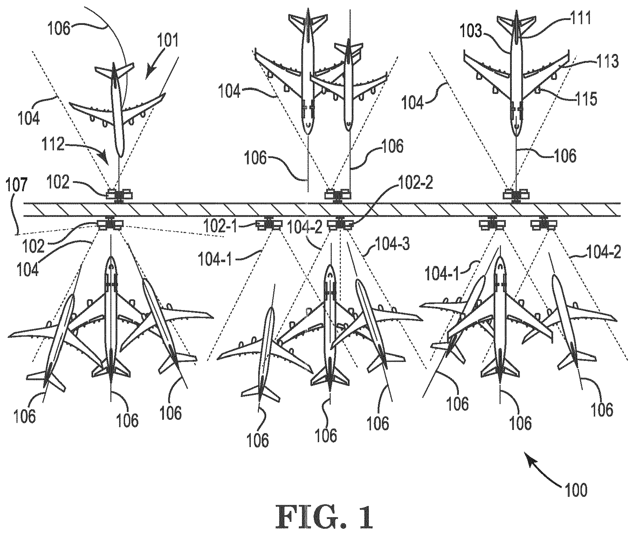

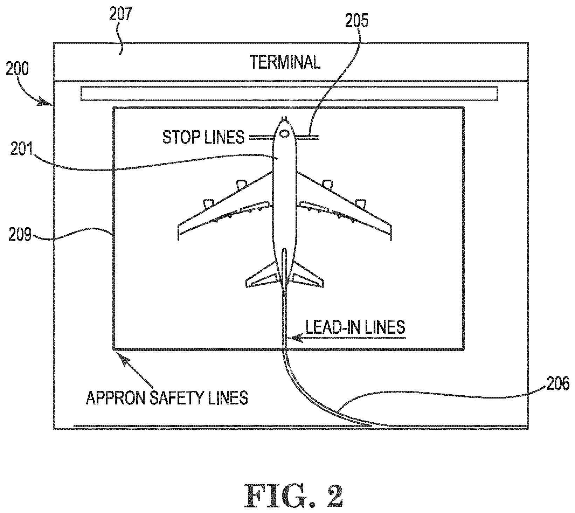

The figures herein follow a numbering convention in which the first digit or digits correspond to the drawing figure number and the remaining digits identify an element or component in the drawing. Similar elements or components between different figures may be identified by the use of similar digits. For example, 116 may reference element "16" in Figure 1, and a similar element may be referenced as 216 in Figure 2.

As used herein, "a" or "a number of" something can refer to one or more such things. For example, "a number of 3D models" can refer to one or more 3D models. Further, as used herein, the term "docking system" is used by itself to refer to the broad system that controls the docking process. The "docking system" includes a central docking system component and a bridge docking system component that each provide different functions within the overall docking system, as will be discussed in more detail below.

Figure 1 illustrates a number of aircraft bridge area arrangements that can be used in accordance with one or more embodiments of the present disclosure. In Figure 1, the three arrangements at the top illustrate a number of embodiments using one sensor array (e.g., a combination of at least one camera image sensor and at least one laser/radar sensor, described herein as a LIDAR/Radar sensor, but embodiments are not so limited and the array could be one image sensor, such as a camera) with aircraft 101 located in bridge areas 100. The bottom three arrangements show embodiments having multiple sensor arrays, as will be discussed in more detail below.

Each arrangement has several common elements. For example, all of the arrangements include a bridge area wherein at least a portion of the bridge area is within the field of view 104 of at least one sensor of a sensor array 102. Although described herein as a "bridge area," the term bridge area as used herein merely means a parking space for an aircraft located on the airside apron of a gate at an airport and although described herein using the term "bridge," the space may sometimes be in a location where, for example, passengers and crew access the aircraft via stairs from the tarmac and a bridge is not used. The embodiments of the present disclosure may be used in such arrangements as well.

Each arrangement also includes at least one aircraft 101 in the bridge area and wherein at least a portion of the aircraft is within the field of view of the image sensor of sensor array 102. In some of the arrangements, a large aircraft arrangement is superimposed over a small aircraft arrangement to show the versatility of these bridge area configurations.

The arrangements also all show at least one lead-in line 106 that indicates to the pilot the correct path to follow to position the aircraft in the correct position and orientation with the bridge area. These lead-in lines can be painted on the tarmac and/or can be virtual lines provided on a display viewed by the pilot on a pilot unit computing device. In arrangements where the bridge area is used with multiple aircraft types, such as the large and small arrangements shown, lead-in lines can be provided for each aircraft and the pilot will need guidance to know which lead-in line to follow based on their type of aircraft.

With respect to the single sensor array embodiments, the embodiment on the top left shows an aircraft 101 moving into a bridge area within the field of view 104 of sensor array 102 having a camera image sensor (the unit with other components is represented at 112). Although most of the lead-in paths are indicated as straight into the bridge area, they are at different positions within the field of view. The top left arrangement illustrates that the aircraft has altered its path (the curvature shown represents the mid-course adjustment) to align itself with the correct lead-in line.

The arrangements on the bottom provide several multiple sensor embodiments. As can be discerned by the illustration, using multiple sensor arrays 102, can allow for more precise movements and can allow for aircraft docking scenarios expanded docking scenario options.

For example, in the bottom left arrangement, two sensor arrays are provided in a single location (e.g., one device with multiple arrays or multiple arrays in close proximity to each other). In this example, the two sensors have a different field of view, with one having a wide field of view (dashed line 107 parallel to the surface of the array) and the other sensor having a narrower field of view 104.

In this manner, the arrays collect different information from their positions that can aid in determining the six dimensional information discussed below and can be helpful in providing data for creating the 3D model discussed herein. The information can be particularly beneficial where the fields of view overlap as those areas then have data from two sources and at different positions, which can be very helpful with respect to 3D modeling and in determining position, orientation, and movement.

The bottom middle arrangement has two sensor arrays spaced apart from each other. In this embodiment, one sensor array 102-1 has one camera image sensor with a field of view 104-1 and one LIDAR or Radar sensor. The second sensor array 102-2 includes multiple camera image sensors each having a different field of view (104-2 and 104-3). As with the bottom left arrangement, the arrays collect different information from their respective positions that can aid in determining the six dimensional information discussed below and can be helpful in providing data for creating the 3D model discussed herein.

The bottom right arrangement has two arrays spaced apart from each other, but the arrays each have one camera image sensor and one LIDAR/Radar sensor. As can be seen in this arrangement, there are a lot of overlapping fields of view (104-1 and 104-2) between the two arrays. As with the other bottom arrangements, the arrays collect different information from their respective positions that can aid in determining the six dimensional information discussed below and can be helpful in providing data for creating the 3D models discussed herein. It should be noted that the bottom arrangements also allow for a larger field of view area than the top arrangements due to the spacing of the sensors or type of sensors used.

As shown in Figure 1, areas of the aircraft such as the fuselage 103, the tail 111, the wings 113, and the engines 115 can be in the field of view of the camera image sensor 104 (e.g., illustrated in the top right arrangement). As discussed below, characteristics of these aircraft features and characteristics of other features can be used to identify the aircraft's type and/or subtype using the processes discussed herein.

Figure 2 illustrates a gate area layout that can be used in accordance with one or more embodiments of the present disclosure. As discussed above, the bridge area 200 (e.g., located near terminal 207 can include a number of stop lines 205 and lead-in lines 206 positioned and oriented on the tarmac based on the types of aircraft that can be guided on that line and stopped at the particular location. Apron safety lines 209 form a perimeter around a portion of the bridge area to alert ground crew that this area should remain clear of obstructions as the aircraft approaches, among other functions.

Figure 3 illustrates a display providing aircraft and alignment details to the pilot in accordance with one or more embodiments of the present disclosure. The device 312 is an advanced VDGS, meaning that it contains a image sensory, such as a camera and another sensor type, as described above. These sensors can, for example, be located in area 314 of the device 312. The device also includes a display 316 for displaying various information. For example, the display can present an aircraft type identifier 317 (e.g., A380). This can aid a pilot and/or ground crew in determining if the correct aircraft is approaching the bridge area. In the example of Figure 3, the display also includes a depiction of the lead-in line at stop line 316, position with respect thereto 320, and direction to the pilot 318 as to how to adjust the aircraft to align with the lead-in line.

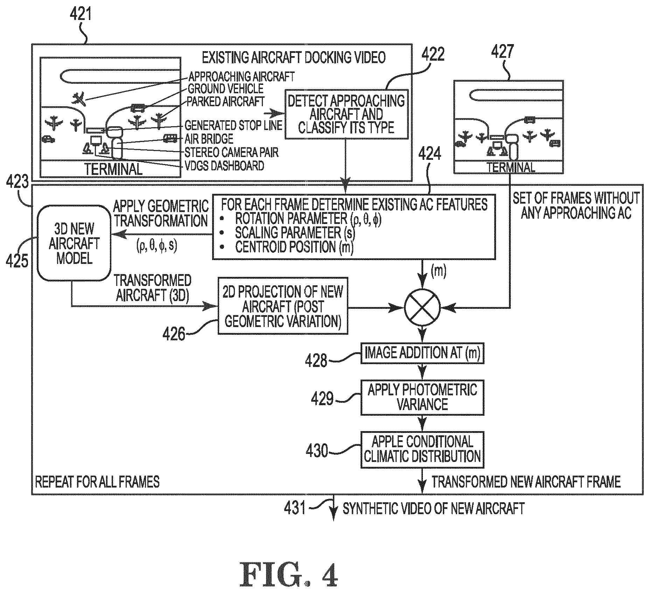

Figure 4 illustrates a method flow in accordance with one or more embodiments of the present disclosure. This solution provides a method where a new aircraft model can be created and tested for a VDGS system where there exists no prior knowledge of a stopping line location or orientation or docking guidance for a new aircraft. A single camera-view, proposed solution for synthetic video generation is shown in Figure 4.

The same steps are performed when data from another camera-view is provided, or the image data from the two sources can be combined in some systems and analyzed together in such a process. The processing of data from image sensors at two locations produces a synthetic video pair of new aircraft docking guidance that can be equivalent to a real left and right camera view of a VDGS imaging pair. Finally, a generated synthetic video from the image pair is passed to a guidance processor for docking guidance generation.

To obtain synthetic video of new aircraft, reference views from any existing aircraft's real video must be obtained (i.e., how any aircraft rotates, translates, or moves forward for any particular parking area having some constant background) at 421. The approaching aircraft can be detected and its aircraft type can be classified. This information can then be used to remove the aircraft from the images, to create synthetic background images that can then be used with any new aircraft that need to be added to the VDGS system. This process is described at 423.

In the image data collected from the VDGS image sensors, irrespective of shape and size of the aircraft or type of aircraft, other non-aircraft image elements within the images almost remain constant. Non-aircraft image elements include, for example: ground vehicles, parked aircraft, generated stop line air bridge, camera locations, VDGS dashboard, terminal, and general bridge area ground layout. Similarly, the changes in between images around the aircraft itself as the aircraft moves between the images can be predictably estimated by using image data from other images in a sequence of images where the portions of the image that are currently obscured by the aircraft are not obscured in the other one or more images.

The subtleties of an aircraft's movements can also be estimated for the new aircraft by recording data related to items, such as: type of rotation at corners under FOV of docking camera, point of halt, slow movement toward a final stopping point, and maintaining lead-in lines are general steps before final docking. Movements from existing aircraft can thereby be generalized and translated over images of the new aircraft model (e.g., a movement style transfer).

Hence, upon detection of an approaching aircraft and classifying its type by an Image Processing Unit (IPU), a specialized algorithm in the IPU estimates geometric transformation parameters of an approaching aircraft. Different parameters extracted in this unit with respect to a known camera center of the VDGS cameras being used at this site are translation, rotation, and scaling parameters. Once the entire aircraft structure is visible under the camera FoV, using translation and rotation parameters, the aircraft's centroid (m) in terms of image pixels is estimated.

Before generating synthetic video of new aircraft, a 3D model 425 of the aircraft is needed. This can be developed using 3D simulation software and will be used for applying geometric parameters.

Estimated rotation and scaling parameters with respect to the camera center are applied on the 3D aircraft model of the new aircraft at center of the model to fit the new aircraft correctly into the scale, position, and orientation of the bridge area viewed in the modified images. This produces rotated and scaled views of the new aircraft for different video frames.

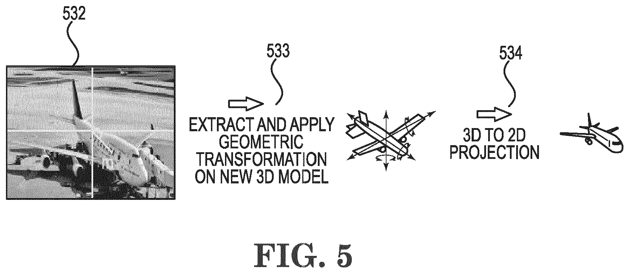

However, a 2D projection 426 (i.e., display screenshot) of this 3D model does not consider the aircraft backgrounds, nearby other aircraft, ground vehicles, different objects, and the taxi path. Hence, in the summing junction or synthesis parameter accumulator block of Figure 4 all required parameters are captured, followed by performing image addition to superimpose a 2D projected new aircraft on a docking scenario (where no approaching aircraft is present) at the centroid position (m) calculated by translation parameters 428. In some embodiments a photometric variance 429 can be applied to blend the color dynamics of the images. Further, in various embodiments climate effects can be added to create images that have different climate 430. The generated synthetic frames produce new aircraft model docking scenario 431 as shown in Figure 5. This process can be repeated for all frames of images data, such as a stream of frames from a video.

Figure 5 illustrates a method flow for creating aircraft model data in accordance with one or more embodiments of the present disclosure. A new aircraft to be added to the system is shown in the image on the left side of Figure 5. Measurements are taken from the image regarding the aircraft to allow the system to create a 3D model of the new aircraft. The 3D model is then translated into a 2d projection that is scaled, positioned, and oriented in the same manner as the old aircraft in the original image (such scaling, position, and orientation data can be taken from the original image and stored in memory). In this manner, the synthetic image can look identical or substantially similar to an original image (except for the different aircraft type) and can, therefore, be used to train the system to identify the new aircraft and identify the aircraft when it actually approaches the bridge area.

The following section discusses the use of a generative neural network, such as a generative adversarial network (GAN), and its variants for applying photometric variation and climatic change on synthetic generated frames in the aircraft background.

The above steps to generate synthetic docking frames does not consider photometric variation of the daylight. However, varying brightness and contrast can be applied to the synthetic image to simulate daylight variation.

However, statistical variation does not always create visually plausible illumination variation. Hence, we propose to use a generative deep neural network which learns latent distribution of different illumination scenario and perform image to image translation to synthetically generate night-time to bright day light docking frames of new aircraft. Also, to apply weather conditions on the synthetically generated docking video frames for different conditional climates like snowy, cloudy, foggy, rainy day another generative model trained with weather data can be applied.

The process of adding photometric variance and conditional climatic distribution make the docking videos for new aircraft model more realistic and varying. This helps IPU to produce reliable stopping line or other guidance for real-time weather and illumination variation. The proposed embodiments that utilize adding photometric and climatic variation are not limited to use of only the above mentioned GANs. In this context, any other suitable generative solution can also be applied.

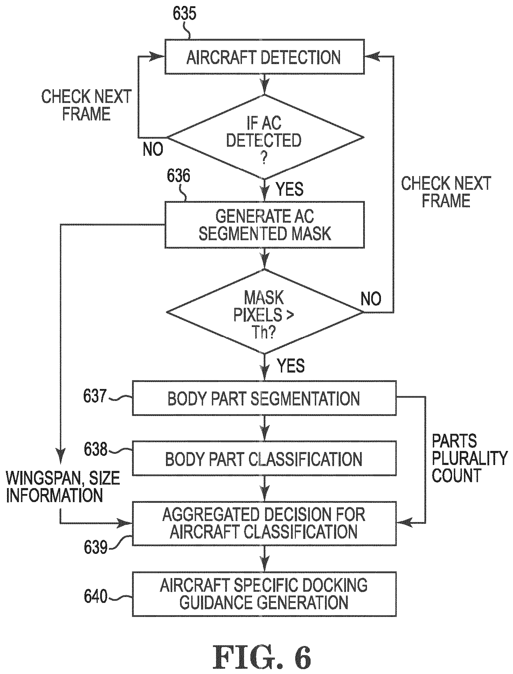

Figure 6 illustrates a method flow for creating aircraft classification data in accordance with one or more embodiments of the present disclosure.

The pipeline for this step is shown in Figure 6. Each input frame of left (or/and) right camera input is processed to detect an approaching aircraft, once detected its type is classified and docking guidance is generated.

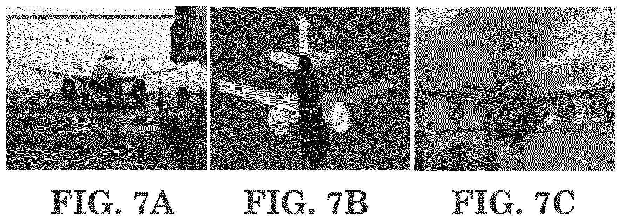

Figure 6 illustrates a pipeline for neural network based robust classification of aircraft type. Figure 7 illustrates a visual depiction of a process for creating aircraft classification data in accordance with one or more embodiments of the present disclosure. These two figures will be discussed together.

An aircraft detection process is shown at 635, wherein a neural network-based (or any other method) object detection model can be developed to detect an approaching aircraft from the camera captured input video frames. The model is trained with set of aircraft images as a positive class and any other natural images as a negative class. The model learns the overall pattern of an aircraft shape which is agnostic to its class type. In the presence of an approaching aircraft, model starts processing of subsequent steps or else it skips processing of the following steps and loops back again to the aircraft detection logic for the next video frame. A sample detected aircraft is shown in Figure 7A.

An aircraft segmentation process is illustrated at 636. In this process a segmented mask of the aircraft once its presence is detected is generated. Furthermore, instance segmentation is provided to the data. This helps in not only retrieving the total number of pixels present in the mask but also predicting to which body part of the aircraft each pixel belongs.

Next, the total number of pixels associated with entire aircraft shape is counted. If the total pixels are less than a threshold, then the subsequent steps illustrated are skipped and the system waits for the next video frames so that a clearly visible aircraft can be processed. This reduces false positives in classifying aircraft type. A sample predicted instance mask of individual body parts is shown in Fig 7B and mask for entire aircraft shape is in Fig 7C which helps in counting the total pixels of the approaching aircraft to compare against the threshold.

Figure 7A illustrates a detected aircraft bounding box having an approaching aircraft located therein. Figure 7B illustrates an instance segmentation predicted mask of an approaching aircraft's body parts, and Figure 7C illustrates a complete mask of the approaching aircraft to get a total pixel count.

A body part segmentation process is illustrated at 637. From the above generated instance body part segmented mask a plurality of components can be counted such as: aircraft engine, wheels, etc. and geometrical features can be measured such as: span of wings, engine position compared to wings, etc. This step helps in deriving intuitive information for docking guidance generation (i.e., if it has detected 4 engines with long wing separation, then it is a large aircraft). Perhaps it is a A320 or other such large aircraft approaching. All this information is passed to subsequent modules.

A body part classification process is illustrated at 638. At the segmented mask pixel location of individual body parts, images of those body parts are classified against reference dataset of aircraft body parts. For example, a system could use a top-k (k can be any integer: 1, 3, 5, etc.) aircraft type prediction of individual body part images. This eliminates a hard-constraint of a VDGS to have in its memory a fixed set of parts selected before the IPU processes to classify the aircraft type.

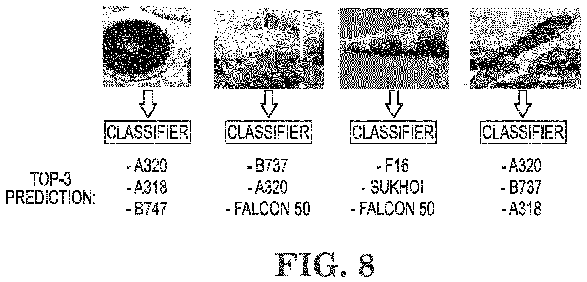

Figure 8 illustrates a visual depiction of another process for creating aircraft classification data in accordance with one or more embodiments of the present disclosure. The embodiment of Figure 8 provides a four factor, top-3 prediction engine, wherein prediction sub-engines each specialize in predicting an aircraft type based on one classification factor (e.g., an engine shape prediction sub-engine). Each prediction sub-engine makes a prediction based on the aircraft body part it is analyzing. From that, each engine makes its top three selects based on the probability that the prediction is correct. As illustrated in the example, three sub-engines predicted the aircraft is an A320, two sub-engines predicted an A318, and two other sub-engines predicted a B737. Based on this analysis, the prediction engine can make a prediction as to the likelihood that the aircraft is of a certain type, in the example of Figure 8, an A320.

In determining aircraft type, criteria can be associated and a priority or a weighting factor given to certain of these criteria (e.g., representing different parts) based on its discriminative feature (e.g., nose shape and/or wing shape may give more information about aircraft type and, accordingly, should be given higher weighting than engine shape or tail shape).

An aggregated decision for aircraft classification process is illustrated at 639 of Figure 6. In this process of decision making all image derived statistical and learning based features are considered. Based on, for example, a majority voting process in combination with weighting body part classification gives a unique aircraft type analysis based on highest weighted voting.

This is further validated against derived statistical features like wingspan, number of engines, etc. If the body part classifier, based on majority voting, predicts the aircraft type as 'A320' and detected 2 engines (or commonalities in a plurality of other criteria), then the process can, finally, classify the approaching aircraft as 'A320' or else, a second most likely prediction can be selected and validated in the same way. The process continues until all aircraft classification criteria matches for one or more frames of camera input have been evaluated for aircraft type.

An aircraft specific docking guidance generation process is illustrated at 640 of Figure 6. Once the aircraft type is detected, its corresponding guidance information can be looked up from an aircraft information reference database. This information can be displayed on VDGS display dashboard.

To accommodate all the necessary processing steps, it is proposes that these neural networks based solution are deployed on a fast computing edge device. Corresponding change in system architecture is shown in below section.

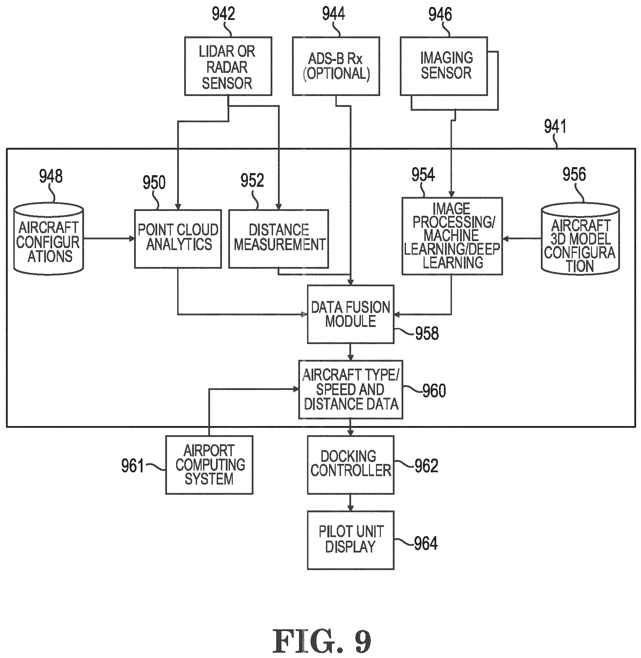

Figure 9 illustrates a flow diagram of a system showing some components of the system and some functions of the system in accordance with one or more embodiments of the present disclosure. Figure 9 shows a central docking system controller 941 of the docking system connected to a number of other devices and systems from which the central docking system controller 941 receives data and/or sends data.

For instance, components including the LIDAR/Radar sensor 942, the ADS-B system 944, the image sensor 946, and the airport computing system 961 are examples of components that send data to the central docking system controller 941. The bridge docking system controller 962 and pilot unit display 964 are examples of components that receive information from the central docking system controller 941.

Although LIDAR/Radar sensing is discussed primarily herein, it should be noted that other light/radio based detection and ranging methodologies may be used to provide the functions of the LIDAR/Radar system described herein. Suitable LIDAR/Radar sensing methodologies include those that scan the aircraft with a LIDAR/Radar sensor by sweeping the laser/radio signals across the aircraft in at least one of a horizontal or vertical direction or both. One suitable laser sensing system is a light detection and ranging (LIDAR) system and a suitable radio signal scanning system is Radio Detection and Ranging (RADAR).

As discussed herein, a system utilizing a camera image sensor includes computing device executable instructions and data to operate the camera image sensor 946, capture image sensor data, and send the data to the central docking system controller 941 for processing. These functions can also be carried out in one or more devices and some of these functions may be provided by the central docking system controller 941. The camera image system provides its data as image data captured from the image sensor and can be data representing frames of video data or one or more still images, for example, taken in a sequence.

In embodiments of the present disclosure, an image processing system is used to create an initial aircraft 3D model (these functions are shown at 954 and 956 of Figure 9) and LIDAR/Radar point cloud analytics (these functions are shown at 948 and 950 of Figure 9), utilized by a LIDAR/Radar module, provide the point cloud for the aircraft that is nearing the bridge area. In some embodiments, the embodiment includes machine learning/deep learning capabilities wherein both of the data outputs get fused by the data fusion module to derive the hybrid accurate aircraft model and/or type and/or subtype detection as well as position and orientation of the aircraft.

In some embodiments, the LIDAR/Radar point cloud creation, image processing 3D model creation, and data fusion can be real-time processes, depending on the computing and networking speed of the docking system, which derives the speed and position of the aircraft. This will provide the input to the central docking system controller to provide the clear information to use in pilot unit display messages that can be used to provide directional and/or speed guidance to the pilot.

The docking systems of the present disclosure aircraft detection methodology analyze not only the outline shape of a 3D model of an aircraft composed from camera image data, but characteristic shape feature parameters of an aircraft including, for example: the number, position, and/or shape of pilot and/or passenger windows; engine location; engine cover size; number of engines; wing span; wing edge to nose end distance; wing shape; fuselage size and/or shape; tail size and/or shape; tail tip height; nose dimensions; and/or other features. In some embodiments, the docking system will also collect data for some similar parameters from the LIDAR/Radar system. Then, based on the data from both data sets, the docking system can determine the position and orientation of the aircraft, its speed, and/or its distance to a stop point where the aircraft is the correct distance from the gate in the bridge area.

In some embodiments, in order to identify a probable aircraft type, the docking system can use camera image sensor data and machine learning (at 954 of Figure 9) to determine aircraft 3D model to determine aircraft type, then merging the data together using data fusion module 958. This merged data can be used to provide an of aircraft type and determination of speed and distance 960. For example, as discussed herein, the docking system can compare a 3D virtual model to one or more aircraft reference models stored in memory of a computing device to find a match between the 3D virtual model and one of the aircraft reference models to determine an aircraft type.

In some embodiments, as discussed above, the docking system does not need to find an exact match to a reference model but can use a statistical probability algorithm to consider how closely the approaching aircraft matches a reference aircraft based on the data's closeness to matching a characteristic of an aircraft (e.g., pilot window position, shape, orientation, nose shape, tail tip height, etc.). As discussed herein, the docking system can receive aircraft type data from the airport's computing system. The docking system can then compare the determined aircraft type with an aircraft type provided in gate arrival information (e.g., from the airport computing system) to determine that the aircraft type that is approaching or in the bridge area is the correct aircraft type.

If the docking system confirms that the correct type of aircraft is entering the bridge area, the docking system can forward guidance information to be displayed by a pilot unit computing system 964 on the aircraft and bridge docking system controller 962 to assist the pilot in positioning and orienting the aircraft correctly with respect to the bridge area and any objects in the bridge area.

If the aircraft is going to the wrong bridge area, the docking system can send information to the pilot indicating that they are going to wrong bridge area. In some embodiments, the docking system can instruct the pilot to stop talking so that they can receive important information.

Through use of this data, embodiments of the present disclosure can, for example, provide bridge area object detection and the presence of foreign objects in the bridge area. For example, the docking system can locate objects in the bridge area and monitor proximity of the aircraft to a particular object within the bridge area including using data for determining proximity of the aircraft to a piece of equipment on a bridge area tarmac surface or near a stop point. Further, some embodiments can be utilized with several bridge area layouts including: single funnel w/single lead-inline, multiple lead-in lines with single funnel where the lead-in lines are converging, and two funnels jointly connected, as illustrated in Figure 1, and these areas can be monitored for aircraft and objects as discussed herein.

Embodiments can also identify a region of interest of a bridge area. For example, an area of interest can be the area that the aircraft will occupy when positioned correctly or a path through the bridge area through which the aircraft will traverse to arrive at the stop point. This can be helpful to identify objects that will need to be moved before or as the aircraft approaches the bridge area.

The docking system can also validate the 3D model based on comparisons with the other models stored and already identified as certain aircraft models to identify which type of aircraft is coming into the bridge area and compare that information with aircraft arrival information to ensure the correct type of aircraft is coming into the bridge area. In some embodiments, the 3D model database and the comparison functionality can be expanded and precisioned based on the use of machine learning. With more models and a higher success rate of positive identifications, the docking system can more accurately identify that the approaching aircraft is of the correct aircraft type and may be able to make the identification more quickly, allowing for an incorrect aircraft to be notified and guided to change course before it enters the bridge area.

One suitable camera system includes: at least one sensor (e.g., single camera or dual camera sensor models), an image processor, and memory. The docking system collects data from one or more frames of image data captured by the image sensor. One suitable system collects image data at, for example, 30 frames per second. As discussed herein, this image data can be used to create a 3D model of the aircraft.

The camera can, for example, include mono or multi-mode sensors, such as high definition camera sensors that can capture the field of view of the apron, including most or all of the bridge area and, potentially, some area outside the bridge area where an aircraft will taxi through to get to the bridge area.

To accomplish this, the camera can, for example, use a camera based pose detection algorithm that uses 3D models of aircraft and image contours to estimate six dimensions (6D) of pose (i.e., x, y, z, roll, pitch, and yaw) of the aircraft to perform a vision pose estimation process.

This 6D of pose estimation can be accomplished by, for example, orienting the projection of the 3D model within an image plane by using a calibrated camera (wherein the image plane is defined as part of the calibration process and wherein the image plane is associated with a real world plane of the bridge area) and then comparing the projection with image contours of the aircraft (from the camera image data). From this data, the six dimensions of the aircraft in the image can be determined.

Additionally, once the camera image data and data have been collected, a data fusion process can occur, where qualities of each data set can be used together to identify the 6D elements. One process for accomplishing data fusion can be to: receive data to be used to form a 3D point cloud from the sensor, calculate a transformation between the coordinates of the system and a vision coordinate system of the camera image system (representative of a real world coordination system of the bridge area), determine an estimated pose of the 3D model from the vision pose estimation process described above. This transformation can be accomplished, for example, by having the sensor data analyzed using a point cloud process to correlate points in the sensor data to points in the camera image data.

This pose can also be determined from any other sensor type, such as from an automatic dependent service - broadcast (ADS-B). An ADS-B system is an in air communications system that broadcasts position, velocity, and other parameters and can be used with embodiments herein to improve aircraft tracking, especially just prior to and entering the camera field of view.

The process also can include: registering point cloud data generated out of the 3D model and 3D point cloud data from the sensor, through an iterated point cloud algorithm (ICP). This registration between the two point cloud data sets can create a final improved pose which is the fusion of both point clouds. As used herein, the process of point cloud analytics refers to registering the points on the point cloud, formed from the image sensor data, to positionally similar data points received from the sensor. This can be accomplished, for example, by mapping both data sets to a virtual space having a common coordinate system.

This improved pose can, for example, be used to find the kinematics of the approaching aircraft using an estimation algorithm (e.g., velocity, acceleration, etc.). The improved pose from the fusion process and the 3D model can also be used to mask out an area occupied by aircraft (e.g., define an aircraft shaped space). In some embodiments, using this mask process, the docking system can search for potential obstacles in the masked area and find places to move them that are located in the non-masked part of the bridge area, using the camera image data. Simply stated, to accomplish this, the docking system identifies objects that are not the aircraft and spaces that are not the masked area.

The docking system can also utilize airport gate information in its analysis. For example, once an airport gate has been assigned by the airport computing system, that information is forwarded to the central docking system. This data includes gate arrival information such as, for example, an aircraft type scheduled to arrive at the gate.

As discussed herein, the docking system can receive information about an incoming flight from the airport computing system 961. For example, the data received from the airport computing system can include an aircraft type - 832N, among other information relevant to docking. For example, a database in the airport computing system can communicate with a central aircraft docking control system at the airport and to the docking system at the particular bridge area where the aircraft is attempting to dock.

The central docking system has a set of aircraft templates stored in memory. The central docking system uses the 832N aircraft type to identify which template represents the type of aircraft arriving at the bridge area and provides that information to the docking system at the bridge area.

In some embodiments, the docking system will search the area it can sense for that aircraft type until it comes into the area. Once an aircraft is sensed, the docking system then checks to see if it is the correct type of aircraft. In some embodiments, camera image data and LIDAR/Radar sensor data can be compared to identify whether an aircraft is present in both the camera image data and the LIDAR/Radar sensor data. This can, for example, be done before merging the camera image data and the LIDAR/Radar sensor data. In this way, computing resources will not be wasted on analysis of objects that are not aircraft.

A suitable guidance range for such systems is that the LIDAR/Radar sensing range of the docking system should allow for sensing to at least the last 25 meters from the stop point. The guidance module of the central docking system can, for example, provide the remaining distance and the horizontal deviation with respect to the center line of the path (e.g., lead-in line) that the aircraft is supposed to follow. This can provide the pilot with directions regarding how to get the aircraft to the correct location. In some embodiments, the guidance system can indicate to the pilot when to brake in order to stop on the stop point.

The docking system can also provide and monitor maximum speeds for approaching a gate. These speed thresholds can be set and monitored, and instructions can be passed to the pilot to slow down. For example, in some embodiments, the determined speed, position, orientation, and/or direction can be sent to a bridge docking system controller device in the bridge docking system and then passed to the pilot unit computing device. After docking at the stop point, the use of chocks can be identified and communicated to the pilot via the central docking system controller, so the pilot knows that they should not try to move the aircraft.

In some embodiments, this information can also be sent to a passenger computing device on the aircraft, so passengers can see when they arrive in the bridge area. This may be beneficial at larger airports where the aircraft may taxi for a long period.

In addition to providing a very robust data set and offering significant additional analysis functionalities, embodiments of the present disclosure also provide redundancy if either the LIDAR/Radar or imaging system are not functioning. This can be highly beneficial in allowing the airport gate to continue to function even if one of the two systems is not operating.

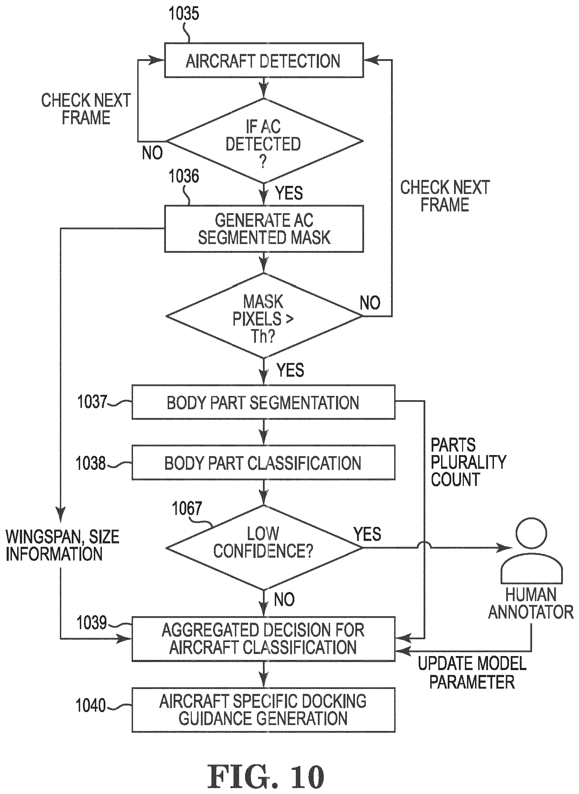

Figure 10 illustrates another method flow for creating aircraft classification data in accordance with one or more embodiments of the present disclosure.

In the above discussion, even though using aircraft detection logic the presence of approaching new aircraft type can be accomplished, but its type cannot be classified since its body parts have not been used in training by the classifier. Accordingly, the classifier shows low confidence while predicting the new aircraft. It is also assumed that the VDGS is still not trained with synthetic videos of that new aircraft as discussed above. In this ad-hoc scenario, a real-time solution to provide guidance to approaching new aircraft is provided below.

Aerospace industry is safety critical. Instead of random assignment of the docking guidance to the new aircraft type (while model has not been trained with its synthetic video previously) the system seeks human input for labelling the aircraft type and generating docking guidance. This is a semi-supervised learning approach. Based on their labeling model, the system updates its learnable parameters.

During this semi-supervised learning time VDGS can raise a stop sign to that new aircraft for safety purpose. Once learned, the model can correctly classify samples of new aircraft body parts and followed by that aircraft type with higher confidence in subsequent image frames. Finally, with such training, the system provides reliable docking guidance.

Figure 10 is a flowchart for docking guidance generation of new aircraft whose VDGS neural network model has not been trained with its synthetic video. Initially each of the body part classifiers, has been trained with closed distribution of individual body part images with existing aircraft types.

Since for new aircraft its body part images are quite diverse from image data from already classified aircraft, the body part classifier predicts with low accuracy and confidence at 1067. Then, it seeks a human annotator's help to include these new data for unseen aircraft to update the older aircraft model parameters for its individual parts. Once updated, the model creation engine predicts this new aircraft class sets the system to collect images of the new aircraft in the future and generates relevant docking guidance.

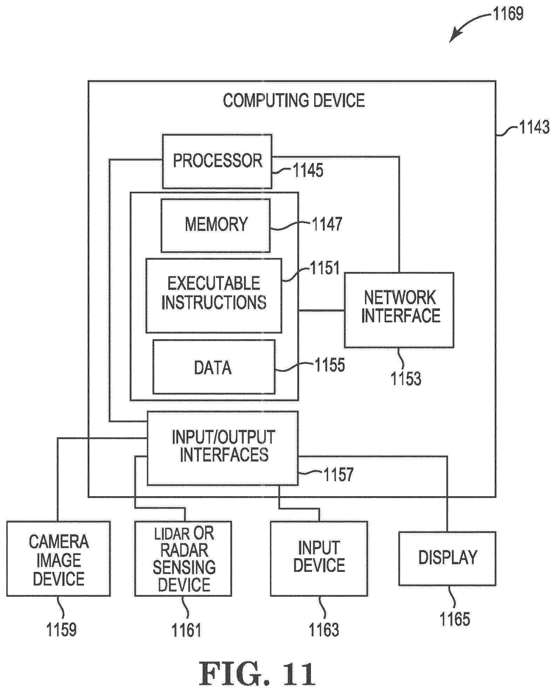

Figure 11 illustrates a computing device for use in accomplishing bridge area aircraft movement functions in accordance with one or more embodiments of the present disclosure. Computing device 1143 is a typical computing device that can be used as the airport computing system, as the central docking system controller 941, as the bridge docking system controller 962, and/or as the pilot unit 964, as described in Figure 9. In the system illustrated in Figure 11, the system 1169 includes a computing device 1143 having a number of components coupled thereto. The computing device 1143 includes a processor 1145 and memory 1147. The memory 1147 can include various types of information including data 1155 and instructions 1151 executable by the processor 1145, discussed herein.

Memory and/or the processor may be located on the computing device 1143 or off the device, in some embodiments. The system can include a network interface 1153. Such an interface can allow for processing on another locally networked computing or other device or devices on other networks. For example, the network interface can include a computing device having Internet access for allowing access to the airport computing system or to access other computing resources to access flight information.

As illustrated in the embodiment of Figure 11, a system can include one or more input and/or output interfaces 1157. Such interfaces can be used to connect the computing device with one or more input or output devices. These devices can be used to receive or access data that can be used to accomplish the functions described herein.

For example, in the embodiment illustrated in Figure 11, the system 1169 can include connectivity to a camera image device 1159 (sensing device), a LIDAR/Radar sensing device 1161, an input device 1163 (e.g., a keyboard, mouse, touch screen, etc.), a display device 1165 (e.g., a monitor) and/or one or more other input devices. The input/output interface 1157 can receive data, storable in the data storage device (e.g., memory 1147), for example, representing the sensor data or aircraft type information discussed herein, among other information.

The processor 1145 can be configured to execute instructions stored in memory to execute functions of the docking system and/or provide the functionalities described herein and can provide those details to a display 1165 (e.g., on a graphical user interface (GUI) running on the processor 1145 and visible on the display 1145).

Such connectivity can allow for the input and/or output of data and/or instructions among other types of information. Although some embodiments may be distributed among various computing devices within one or more networks, such systems as illustrated in Figure 11 can be beneficial in allowing for the query, analysis, and/or display of information discussed herein.

The current disclosure provides unique solution to provide docking guidance to a new approaching aircraft type without depending on customer captured real video. Further to existing real videos, augmenting adversarial effect by generating synthetic videos enhances the capability of a VDGS to detect any existing\new aircraft with higher accuracy at bad lighting or an adverse weather condition. This learning-based solution provides cost effective and real-time alternate solution that replaces statistical processing at IPU with a neural network-based solution deployed, for example, on an edge device. The solutions impact minimal hardware change on an existing VDGS and removes the constraint on fixed clear displays of specific aircraft body parts.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion and not a restrictive one. Combination of the above embodiments, and other embodiments not specifically described herein, will be apparent to those of skill in the art upon reviewing the above description.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method (635) for aircraft detection, comprising:
capturing camera image data of a new aircraft;
generating (636) a segmented aircraft mask;
segmenting (637) the image data of the new aircraft into body part segmentation data;
classifying (638) the body part segmentation data into a plurality of classes by classifying images of those body parts against a reference dataset of aircraft body parts;
analyzing each class of body part segmentation data to predict an aircraft type for the new aircraft using a plurality of prediction sub-engines and wherein the prediction sub-engines each specialize in predicting an aircraft type based on one classification factor and each prediction sub-engine makes a prediction based on the aircraft body part it is analyzing;
determining the aircraft type of the new aircraft based on the prediction analysis; and
generating (640) aircraft specific docking guidance for the new aircraft based on the determined aircraft type.

2. The method of claim 1, wherein segmenting the image data of the new aircraft includes counting the total number of pixels associated with entire aircraft shape.

3. The method of claim 2, wherein if the total pixels are less than a threshold, then the subsequent method steps are skipped and the method begins again with a next video frame to determine when the total pixels are over the threshold indicating a clearly visible aircraft can be processed.

4. The method of claim 1, wherein segmenting the image data of the new aircraft includes predicting to which body part of the aircraft each pixel belongs.

5. The method of claim 1, wherein the classification factor is selected from the group of factors including: engine shape, nose shape, wing shape, and tail shape.

6. The method of claim 1, wherein the classification factors include a weighting factor that values a particular classification factor over other classification factors.

7. The method of claim 1, wherein capturing camera image data of the new aircraft includes receiving camera image data of a scene having data of the unknown aircraft (101) and data of a number of non-aircraft elements within a field of view (104) of a camera while the new aircraft (101) is approaching or in a bridge area (100) of an airport and extracting the data of the new aircraft (101) from the data of the scene to create a non-aircraft only data set.

8. The method of claim 1, wherein generating aircraft specific docking guidance for the new aircraft incudes a direction to a particular lead-in line (106, 206) in the bridge area.

9. The method of claim 1, wherein generating aircraft specific docking guidance for the unknown new aircraft incudes a direction to a particular stop line (205, 316) in the bridge area.

10. The method of claim 1, wherein segmenting the image data of the new aircraft into body part segmentation data includes one or more body part segments selected from the group including: engine shape, nose shape, wing shape, and tail shape.

11. A system for aircraft detection, comprising a camera image device (1159); and
a computing device having a processor and memory, the memory having instructions stored therein and the instructions being executable by the processor to cause the system to perform the method of claim 1.

## Patentansprüche

1. Verfahren (635) zur Flugzeugerkennung, umfassend:
Erfassen von Kamerabilddaten eines neuen Flugzeugs;
Erzeugen (636) einer segmentierten Flugzeugmaske;
Segmentieren (637) der Bilddaten des neuen Flugzeugs in Körperteilsegmentierungsdaten;
Klassifizieren (638) der Körperteilsegmentierungsdaten in eine Vielzahl von Klassen durch Klassifizieren von Bildern der Körperteile in Bezug auf einen Referenzdatensatz von Flugzeugkörperteilen;
Analysieren jeder Klasse von Körperteilsegmentierungsdaten, um einen Flugzeugtyp für das neue Flugzeug unter Verwendung einer Vielzahl von Vorhersage-Unterengines vorherzusagen, und wobei die Vorhersage-Unterengines jeweils darauf spezialisiert sind, einen Flugzeugtyp auf Basis eines Klassifizierungsfaktors vorherzusagen und jede Vorhersage-Unterengine eine Vorhersage auf Basis des Flugzeugkörperteils erstellt, den sie analysiert;
Bestimmen des Flugzeugtyps des neuen Flugzeugs auf Basis der Vorhersageanalyse; und
Erzeugen (640) einer flugzeugspezifischen Andockführung für das neue Flugzeug auf Basis des bestimmten Flugzeugtyps.

2. Verfahren nach Anspruch 1, wobei das Segmentieren der Bilddaten des neuen Flugzeugs das Zählen der Gesamtanzahl von Pixeln, die der gesamten Flugzeugform zugehörig sind, beinhaltet.

3. Verfahren nach Anspruch 2, wobei, wenn die Gesamtpixel weniger als ein Schwellenwert sind, die anschließenden Verfahrensschritte dann übersprungen werden und das Verfahren erneut mit einem nächsten Video-Frame beginnt, um zu bestimmen, wenn die Gesamtpixel über dem Schwellenwert sind, was angibt, dass ein klar sichtbares Flugzeug verarbeitet werden kann.

4. Verfahren nach Anspruch 1, wobei das Segmentieren der Bilddaten des neuen Flugzeugs das Vorhersagen, zu welchem Körperteil des Flugzeugs jedes Pixel gehört, beinhaltet.

5. Verfahren nach Anspruch 1, wobei der Klassifizierungsfaktor ausgewählt ist aus der Gruppe von Faktoren, die Folgende beinhalten: Triebwerksform, Nasenform, Flügelform und Heckform.

6. Verfahren nach Anspruch 1, wobei die Klassifizierungsfaktoren einen Gewichtungsfaktor beinhalten, der einen bestimmten Klassifizierungsfaktor höher als andere Klassifizierungsfaktoren bewertet.

7. Verfahren nach Anspruch 1, wobei das Erfassen von Kamerabilddaten des neuen Flugzeugs Folgendes beinhaltet: Empfangen von Kamerabilddaten einer Szene, die Daten des unbekannten Flugzeugs (101) und Daten einer Anzahl von Nichtflugzeugelementen innerhalb eines Sichtfelds (104) einer Kamera während das neue Flugzeug (101) anfliegt oder in einem Brückenbereich (100) eines Flughafens aufweist, und Extrahieren der Daten des neuen Flugzeugs (101) aus den Daten der Szene, um einen Satz nur aus Nichtflugzeugdaten zu erstellen.

8. Verfahren nach Anspruch 1, wobei das Erzeugen einer flugzeugspezifischen Andockführung für das neue Flugzeug eine Richtung zu einer bestimmten Einrolllinie (106, 206) in dem Brückenbereich beinhaltet.

9. Verfahren nach Anspruch 1, wobei das Erzeugen einer flugzeugspezifischen Andockführung für das unbekannte neue Flugzeug eine Richtung zu einer bestimmten Haltelinie (205, 316) in dem Brückenbereich beinhaltet.

10. Verfahren nach Anspruch 1, wobei das Segmentieren der Bilddaten des neuen Flugzeugs in Körperteilsegmentierungsdaten einen oder mehrere Körperteilsegmente beinhaltet, die ausgewählt sind aus der Gruppe, die Folgende beinhaltet: Triebwerksform, Nasenform, Flügelform und Heckform.

11. System zur Flugzeugerkennung, umfassend eine Kamerabildvorrichtung (1159); und
eine Rechenvorrichtung, die einen Prozessor und einen Speicher aufweist, wobei der Speicher darin gespeicherte Anweisungen aufweist, die durch den Prozessor dazu ausgeführt werden können, das System zu veranlassen, das Verfahren nach Anspruch 1 durchzuführen.

## Revendications

1. Procédé (635) de détection d'aéronef, comprenant :
la capture de données d'image de caméra d'un nouvel aéronef ;
la génération (636) d'un masque d'aéronef segmenté ;
la segmentation (637) des données d'image du nouvel aéronef en données de segmentation de parties de fuselage ;
la classification (638) des données de segmentation de parties de fuselage en une pluralité de catégories en classifiant des images de ces parties de fuselage en vertu d'un ensemble de données de référence de parties de fuselage d'aéronef ;
l'analyse de chaque catégorie de données de segmentation de parties de fuselage pour prédire un type d'aéronef pour le nouvel aéronef en utilisant une pluralité de sous-moteurs de prédiction et dans lequel les sous-moteurs de prédiction sont chacun spécialisés dans la prédiction d'un type d'aéronef sur la base d'un facteur de classification et chaque sous-moteur de prédiction fait une prédiction sur la base de la partie de fuselage d'aéronef qu'il analyse ;
la détermination du type d'aéronef du nouvel aéronef sur la base de l'analyse de prédiction ; et
la génération (640) du guidage pour l'accostage spécifique à l'aéronef pour le nouvel aéronef sur la base du type d'aéronef déterminé.

2. Procédé selon la revendication 1, dans lequel la segmentation des données d'image du nouvel aéronef inclut le comptage du nombre total de pixels associé à la forme entière de l'aéronef.

3. Procédé selon la revendication 2, dans lequel si la totalité des pixels est inférieure à un seuil, alors les étapes de procédé ultérieures sont ignorées et le procédé reprend avec la trame vidéo suivante pour déterminer quand la totalité de pixels est au-delà du seuil indiquant qu'un aéronef clairement visible peut être traité.

4. Procédé selon la revendication 1, dans lequel la segmentation des données d'image du nouvel aéronef inclut la prédiction de la partie de fuselage de l'aéronef à laquelle chaque pixel appartient.

5. Procédé selon la revendication 1, dans lequel le facteur de classification est sélectionné dans le groupe de facteurs incluant : forme de moteur, forme de nez, forme d'aile et forme de queue.

6. Procédé selon la revendication 1, dans lequel les facteurs de classification incluent un facteur de pondération qui valorise un facteur de classification particulier par rapport à d'autres facteurs de classification.

7. Procédé selon la revendication 1, dans lequel la capture de données d'image de caméra du nouvel aéronef inclut la réception de données d'image de caméra d'une scène présentant des données de l'aéronef inconnu (101) et de données d'un nombre d'éléments non-aéronef à l'intérieur d'un champ de vision (104) d'une caméra alors que le nouvel aéronef (101) est en approche ou dans une zone de passerelle (100) d'un aéroport et l'extraction des données du nouvel aéronef (101) à partir des données de la scène pour créer un ensemble de données uniquement non-aéronef.

8. Procédé selon la revendication 1, dans lequel la génération du guidage pour l'accostage spécifique à l'aéronef pour le nouvel aéronef inclut une direction vers une ligne d'entrée particulière (106, 206) dans la zone de passerelle.

9. Procédé selon la revendication 1, dans lequel la génération du guidage pour l'accostage spécifique à l'aéronef pour le nouvel aéronef inconnu inclut une direction vers une ligne d'arrêt particulière (205, 316) dans la zone de passerelle.

10. Procédé selon la revendication 1, dans lequel la segmentation des données d'image du nouvel aéronef dans les données de segmentation de parties de fuselage inclut un ou plusieurs segments de parties de fuselage sélectionnés dans le groupe incluant : forme de moteur, forme de nez, forme d'aile et forme de queue.

11. Système de détection d'aéronef, comprenant un dispositif d'image de caméra (1159) ; et
un dispositif informatique présentant un processeur et une mémoire, la mémoire présentant des instructions stockées dans celle-ci et les instructions étant exécutables par le processeur pour amener le système à réaliser le procédé selon la revendication 1.
